# EUROPEAN PATENT APPLICATION

(11) **EP 3 021 050 A2**
(43) Date of publication of application: **18.05.2016**
(21) Application number: 15192438.8
(22) Date of filing: 30.10.2015
(51) Int. Cl.: F24F 1/00

(54) **AIR CONDITIONING DEVICE**

(30) Priority: 12.11.2014 KR 20140157354
(71) Applicant: Samsung Electronics Co., Ltd., Gyeonggi-do 16677 (KR)
(72) Inventor: LEE, Je-gu, Seoul (KR); NA, Seon-uk, Gyeonggi-do (KR); TAE, Sang-jin, Gyeonggi-do (KR)
(74) Representative: Taor, Simon Edward William

(57) **Abstract**

An air conditioning device having an indoor heat exchanger, a heat recovery ventilator, a supply fan, and an exhaust fan inside a housing and configured to perform at least one of cooling/heating, heat recovery ventilation, and pure ventilation. The air conditioning device includes a first flow path configured to guide indoor air while the cooling/heating is performed, a second flow path configured to guide the indoor air toward the heat recovery ventilator, and a third flow path configured to guide outdoor air toward the heat recovery ventilator while the heat recovery ventilation is performed. The air conditioning device includes fourth and fifth flow paths configured to guide indoor air and outdoor air, respectively, and an inlet port that corresponds to the third flow path and the fifth flow path, and a discharge port that corresponds to outlets of the second flow path and the fourth flow path.

## Description

The present disclosure relates generally to an air conditioning device, and more particularly to an air conditioning device, which can simultaneously perform ventilation and cooling/heating.

Recently, the moderns make a living indoors, such as inside a building or a means of transportation, most of the day. In order to keep the interior of a room in an agreeable environment, a window may be opened for ventilation, or a separate ventilation device may be installed. However, this may cause inconvenience.

In order to solve the above-described problem, various air conditioning devices having ventilation functions have recently been proposed. However, an air conditioning device having a ventilation function separately requires a flow path to perform cooling and heating and another flow path to perform ventilation. For this, an air conditioning device in the related art may include a plurality of indoor air inlet ports for the inflow of indoor air, or an outdoor air inlet port and an outdoor air discharge port may be modified to match a case where they perform their own functions.

However, if a plurality of indoor air inlet ports are provided, it becomes necessary to install separate ducts for the respective indoor air inlet ports, and thus the manufacturing cost is increased. Further, additional space is required in installing the air conditioning device, and a plurality of ducts should be connected to the air conditioning device which causes inconvenience.

Further, since air pollution has recently become more severe, it is preferable to provide a filter for filtering pollution materials from external air on the side of the outdoor air inlet port. Accordingly, in the case where the outdoor air inlet port and the outdoor air discharge port are modified to match the case where they perform their own functions, it is required to install additional filters for filtering pollution materials from external air on the outdoor air inlet port and the outdoor air discharge port, and this causes the manufacturing cost of the product to be increased.

The present disclosure has been made to address at least the above problems and/or disadvantages and to provide at least the advantages described below. Accordingly, an aspect of the present disclosure provides an air conditioning device, which can reduce the number of filters required and thus can reduce the manufacturing cost of the air conditioning device by designing a flow path so that an outdoor air inlet port and an indoor air inlet port can be constantly maintained even if the performing function of the air conditioning device is modified.

Another aspect of the present disclosure provides an air conditioning device, which can reduce power consumption of a fan by reducing air resistance that is caused by filters through reduction of the number of the filters required in the air conditioning device.

Still another aspect of the present disclosure provides an air conditioning device, which can reduce power consumption that is caused by driving of an exhaust fan by adjusting the position of the exhaust fan so as to drive the exhaust fan only in case of need.

According to one aspect of the present disclosure, an air conditioning device having an indoor heat exchanger, a heat recovery ventilator, a supply fan, and an exhaust fan inside a housing and is configured to perform at least one of cooling, heating, heat recovery ventilation, and pure ventilation, includes a first flow path configured to guide indoor air while at least one of cooling and heating is to be performed, a second flow path configured to guide the indoor air toward the heat recovery ventilator and a third flow path configured to guide outdoor air toward the heat recovery ventilator while the heat recovery ventilation is to be performed, a fourth flow path configured to guide the indoor air and a fifth flow path configured to guide the outdoor air while the pure ventilation is to be performed; and an inlet port and a discharge port formed on the housing, wherein the outdoor air flows through the inlet port to the third flow path and the fifth flow path, and the indoor air guided through the second flow path and the fourth flow path is discharged through the discharge port.

A second inlet port may correspond to inlet of the first flow path, the second flow path, and the fourth flow path, and the second discharge port may correspond to outlet of the first flow path, the third flow path, and the fifth flow path.

The heat recovery ventilator may be arranged in a portion of the second flow path and the third flow path in which the second flow path and the third flow path meet each other.

First to fifth flow path opening and closing portions correspondingly arranged on the first flow path, the second flow path, the third flow path, the fourth flow path and the fifth flow path and configured to selectively open and close the first flow path, the second flow path, the third flow path, the fourth flow path and the fifth flow path, respectively.

The first to fifth flow path opening and closing portions may be dampers.

When the cooling and heating and the heat recovery ventilation are performed together, an amount of airflow that passes through the first flow path, the second flow path and third flow paths may be adjusted by a degree of opening of first flow path, the second flow path and third flow path opening and closing portions among the first to fifth flow path opening and closing portion.

A first filter may be arranged in a part of a common section between the third flow path and fifth flow path to be adjacent to the inlet port.

The exhaust fan may be arranged in a part of a common section between the second flow path and fourth flow path to be adjacent to the discharge port, and the exhaust fan may be driven while the second flow path or the fourth flow path is open.

A second filter may be arranged in a part of a common section between the first flow path, the second flow path, and the fourth flow path to be adjacent to the second inlet port.

The supply fan and the indoor heat exchanger may be arranged in a part of a common section between the first flow path, the third flow path, and the fifth flow path to be adjacent to the second discharge port.

According to another aspect of the present disclosure, an air conditioning device has an indoor heat exchanger, a heat recovery ventilator, a supply fan, and an exhaust fan and is configured to perform at least one of cooling and heating, heat recovery ventilation, and pure ventilation. The air conditioning device includes a first inlet port through which outdoor air flows in, a second inlet port through which indoor air flows in, a first discharge port through which air is discharged to an outside, a second discharge port through which air is discharged to an inside, a first flow path through which the indoor air that flows in through the second inlet port is discharged to the second discharge port after the indoor air passes through the indoor heat exchanger, a second flow path through which the indoor air that flows in through the second inlet port is discharged to the first discharge port after the indoor air passes through the heat recovery ventilator, a third flow path through which the outdoor air that flows in through the first inlet port is discharged to the second discharge port after the outdoor air passes through the heat recovery ventilator, a fourth flow path through which the indoor air that flows in through the second inlet port is discharged to the first discharge port, and a fifth flow path through which the outdoor air that flows in through the first inlet port is discharged to the second discharge port. The heat recovery ventilator is arranged in a portion of the second flow path and the third flow path in which the second flow path and the third flow path meet each other.

First to fifth flow path opening and closing portions arranged on the first to fifth flow paths for selectively opening and closing the first to fifth flow paths.

A first filter may be arranged in a part of a common section between the third flow path and fifth flow path to be adjacent to the first inlet port.

The exhaust fan may be arranged in a part of a common section between the second flow path and fourth flow path to be adjacent to the first discharge port, and the exhaust fan may be driven while the second flow path or the fourth flow path is open.

According to still another aspect of the present disclosure, an air conditioning device has an indoor heat exchanger, a heat recovery ventilator, a supply fan, and an exhaust fan inside a housing and is configured to perform at least one of cooling and heating, heat recovery ventilation, and pure ventilation. The air conditioning device includes a first inlet port, a second inlet port, a first discharge port, and a second discharge port, which are formed on an outer surface of the housing, first to fifth flow path opening and closing portions arranged inside the housing; a first flow path configured to guide indoor air, which flows in through the second inlet port and moves to the indoor heat exchanger through a first of the first to fifth flow path opening and closing portions, to be discharged to the second discharge port after the heat exchange of the indoor air is performed through the indoor heat exchanger. The air conditioning device may include a second flow path configured to guide the indoor air, which flows in through the second inlet port and passes through the heat recovery ventilator, to be discharged to the first discharge port through a second of the first to fifth flow path opening and closing portions after the heat exchange of the indoor air is performed through the heat recovery ventilator, a third flow path configured to guide outdoor air, which flows in through the first inlet port and moves to the heat recovery ventilator through a third of the first to fifth flow path opening and closing portions, to be discharged to the second discharge port after the heat exchange of the outdoor air is performed through the heat recovery ventilator.

The air conditioning device may include a fourth flow path configured to guide the indoor air, which flows in through the second inlet port, to be discharged to the first discharge port through the fourth flow path opening and closing portions, and a fifth flow path configured to guide the outdoor air, which flows in through the first inlet port, to be discharged to the second discharge port through a fifth of the first to fifth flow path opening and closing portions, wherein the heat recovery ventilator is arranged in a portion in which the second flow path and the third flow path meet each other, and a first filter is arranged in a part of a common section between the third flow path and the fifth flow path to be adjacent to the first inlet port.

According to an aspect of the present disclosure, there is provided an air conditioning device having an indoor heat exchanger, a heat recovery ventilator, a supply fan, and an exhaust fan and is configured to perform at least one of cooling and heating, heat recovery ventilation, and pure ventilation, the air conditioning device comprising: a first inlet port through which outdoor air flows in; a second inlet port through which indoor air flows in; a first discharge port through which air is discharged to an outside; a second discharge port through which air is discharged to an inside; a first flow path through which the indoor air that flows in through the second inlet port is discharged to the second discharge port after the indoor air passes through the indoor heat exchanger; a second flow path through which the indoor air that flows in through the second inlet port is discharged to the first discharge port after the indoor air passes through the heat recovery ventilator; a third flow path through which the outdoor air that flows in through the first inlet port is discharged to the second discharge port after the outdoor air passes through the heat recovery ventilator; a fourth flow path through which the indoor air that flows in through the second inlet port is discharged to the first discharge port; and a fifth flow path through which the outdoor air that flows in through the first inlet port is discharged to the second discharge port

The above and other aspects, features and advantages of the present disclosure will be more apparent from the following detailed description when taken in conjunction with the accompanying drawings, in which:
FIG. 1 is a perspective view illustrating an air conditioning device according to an embodiment of the present disclosure;
FIG. 2 is a perspective view illustrating a main body from which ducts are separated in the air conditioning device illustrated in FIG. 1;
FIG. 3 is a separated perspective view illustrating the interior of the main body of the air conditioning device illustrated in FIG. 2;
FIG. 4 is a separated perspective view illustrating the interior of the main body of the air conditioning device illustrated in FIG. 2 as seen from a different side from that in FIG. 3;
FIG. 5 is a schematic diagram illustrating flow paths in the case where the air conditioning device illustrated in FIG. 1 performs cooling/heating;
FIG. 6 is a schematic diagram illustrating flow paths in the case where the air conditioning device illustrated in FIG. 1 performs heat recovery ventilation;
FIG. 7 is a schematic diagram illustrating flow paths in the case where the air conditioning device illustrated in FIG. 1 performs pure ventilation; and
FIG. 8 is a schematic diagram illustrating flow paths in the case where the air conditioning device illustrated in FIG. 1 performs both cooling/heating and heat recovery ventilation.

Hereinafter, an air conditioning device 1 according to an embodiment of the present disclosure will be described with reference to the accompanying drawings. In describing the embodiment of the present disclosure, a detailed description of known constructions or functions will be omitted if it is deemed that such description would make the gist of the present disclosure unnecessarily vague. In the drawings, to help the understanding of the present disclosure, sizes of some constituent elements may be exaggerated for clarity in explanation.

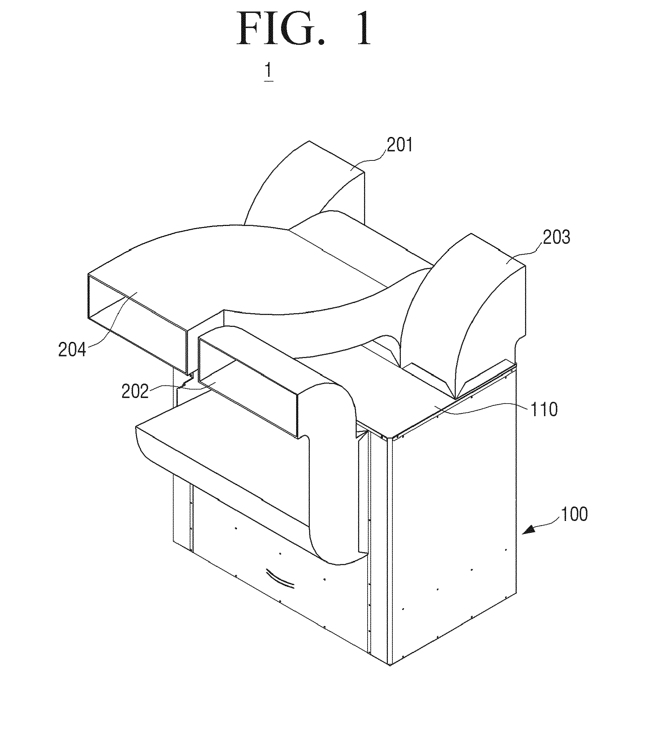

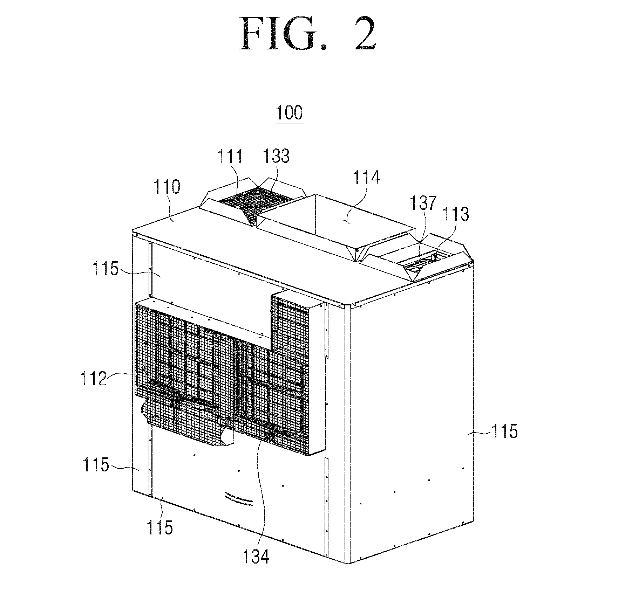

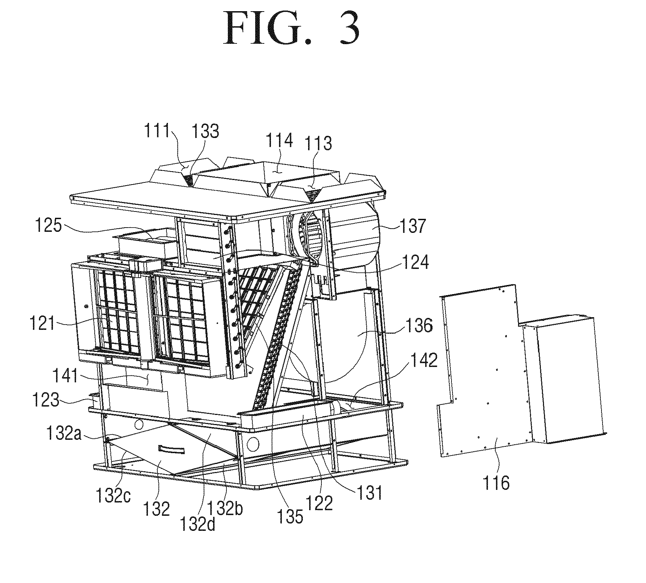

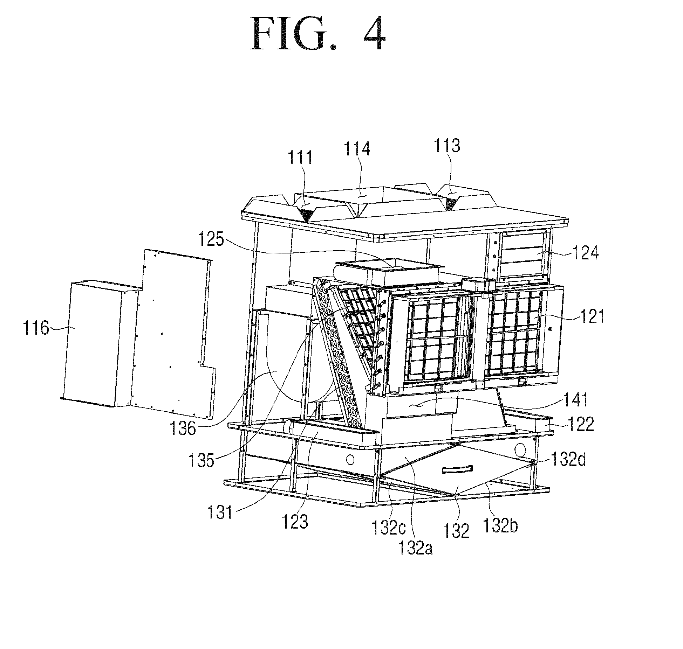

FIG. 1 is a perspective view illustrating an air conditioning device 1 according to an embodiment of the present disclosure, and FIG. 2 is a perspective view illustrating the shape of a main body portion 100 from which first to fourth ducts 201 to 204 are separated in the air conditioning device 1 of FIG. 1. FIGS. 3 and 4 are exploded perspective views illustrating the main body portion 100 of FIG. 2, from which external covers 115 and a second filter 134 are removed, in a state where internal covers 116 are separated from the main body 100.

Referring to FIGS. 1 to 4, an air conditioning device according to an embodiment of the present disclosure includes a main body portion 100 and first to fourth ducts 201 to 204.

The main body portion 100 includes a housing 110, first to fifth flow path opening/closing portions 121 to 125, an indoor heat exchanger 131, a heat recovery ventilator 132, first to third filters 133 to 135, a supply fan 136, and an exhaust fan 137.

The first to fifth flow path opening/closing portions 121 to 125, the indoor heat exchanger 131, the heat recovery ventilator 132, the first to third filters 133 to 135, the supply fan 136, and the exhaust fan 137 are provided in the housing 110, and the housing 110 forms flow paths through which indoor air and outdoor air flow. Further, the first to fourth ducts 201 to 204 to be described later are connected and fixed to the housing 110.

The first to fifth flow path opening/closing portions 121 to 125 selectively open or close first to fifth flow paths 301 to 305 to be described later. The first to fifth flow path opening/closing portions 121 to 125 may include dampers, but embodiments of the invention are not limited thereto. The dampers may also be omitted.

The indoor heat exchanger 131 is connected to an outdoor unit (not illustrated) of a freezing cycle, and is provided with a plurality of refrigerant pipes through which refrigerant flows. Through such refrigerant pipes, the indoor heat exchanger 131 performs heat exchange with air that passes through the indoor heat exchanger 131. That is, in the case of performing indoor cooling, the indoor heat exchanger 131 absorbs heat from the air, whereas in the case of performing indoor heating, it discharges heat to the air.

The heat recovery ventilator 132 includes a plurality of flow paths through which indoor air and outdoor air, which have a temperature difference, flow, and a plurality of pipes are arranged to be alternately directed in different directions so that heat exchange is performed between the indoor air and the outdoor air.

In the case of using the heat recovery ventilator 132, ventilation is performed and at the same time, heat exchanging is primarily performed between the indoor air and the outdoor air. Accordingly, in the case where heat recovery ventilation and cooling/heating are performed together, the rate of heat exchange to be performed by the indoor heat exchanger is reduced, and thus cooling/heating efficiency can be increased.

The first filter 133 is arranged adjacent to a first inlet port 111 to be described later in order to perform filtering of pollution materials included in air that flows in from an outside. The first filter 133 may include a HEPA (High Efficiency Particulate Air) filter that can collect fine dust.

The second filter 134 is arranged adjacent to a second inlet port 112 to be described later in order to perform filtering of pollution materials included in air that flows in from the interior of a room. In particular, the second filter 134 may filter the pollution materials included in the indoor air when indoor cooling/heating is performed through making the indoor air directly pass through the indoor heat exchanger 131.

The third filter 135 may perform filtering of pollution materials included in the air that flows to the interior of a room when the cooling/heating or pure ventilation is performed. The third filter 135 may include a K-type filter that collects fine dust using an electric field.

The supply fan 136 generates an air flow to discharge the air in the air conditioning device 1 to the interior of a room. A plurality of supply fans 136 may be provided.

The exhaust fan 137 generates an air flow to discharge the air in the air conditioning device 1 to the outside. A plurality of exhaust fans 137 may be provided.

Since the first to fifth flow path opening/closing portions 121 to 125, the indoor heat exchanger 131, the heat recovery ventilator 132, the first to third filters 133 to 135, the supply fan 136, and the exhaust fan 137 belong to the technology well known in the art, the detailed explanation thereof will be omitted.

In addition, the housing 110 is provided with the first inlet port 111, the second inlet port 112, a first discharge port 113, and a second discharge port 114, which are formed on outer surfaces of the housing 110.

The first inlet port 111 is an inlet which is connected and fixed to the first duct 201 to be described later to communicate with the outside and makes the outdoor air flow into the air conditioning device 1. Accordingly, it is preferable that the first filter 133 is arranged adjacent to the first inlet port 111.

The second inlet port 112 is an inlet which is connected and fixed to the second duct 202 to be described later to communicate with the interior of a room and makes the indoor air flow into the air conditioning device 1. Specifically, the first flow path opening/closing portion 121 and the fourth flow path opening/closing portion 124 are arranged in the second inlet port 112, and a first ventilation port 141 is formed therein. Further, it is preferable that the second filter 134 is arranged adjacent to the second inlet port 112.

The first discharge port 113 is an outlet which is connected and fixed to the third duct 203 to be described later to communicate with the outside and discharges the air in the air conditioning device 1 to the outside. Accordingly, it is preferable that the exhaust fan 137 is arranged adjacent to the first discharge port 113.

The second discharge port 114 is an outlet which is connected and fixed to the fourth duct 204 to be described later to communicate with the interior of a room and discharges the air in the air conditioning device 1 to the interior of a room. Accordingly, it is preferable that the supply fan 136 is arranged adjacent to the second discharge port 114.

Further, the housing 110 includes an external cover 115 and an internal cover 116.

The external cover 115 forms an external appearance of the housing 110 and helps forming of flow paths to be described later. Further, the internal cover 116 does not form the external appearance, but helps forming of the flow paths inside the housing 110.

Then, the first duct 201 is connected and fixed to the first inlet port 111, and extends toward the outside so that the outdoor air flows in through the first duct 201.

The second duct 202 is connected and fixed to the second inlet port 112, and extends toward the interior of a room so that the indoor air flows in through the second duct 202.

The third duct 203 is connected and fixed to the first discharge port 113, and extends toward the outside so that the air in the air conditioning device 1 is discharged to the outside.

The fourth duct 204 is connected and fixed to the second discharge port 114, and extends toward the interior of a room so that the air in the air conditioning device 1 is discharged to the interior of a room.

The first to fifth flow paths 301 to 305, through which the indoor air or the outdoor air flows, are formed in the main body 100 of the air conditioning device 1. The first to fifth flow paths 301 to 305 will be described in detail in relation to the operation of the air conditioning device 1 according to an embodiment of the present disclosure.

Hereinafter, the cooling/heating, heat recovery ventilation, and pure ventilation processes of the air conditioning device 1 as constructed above according to an embodiment of the present disclosure will be described.

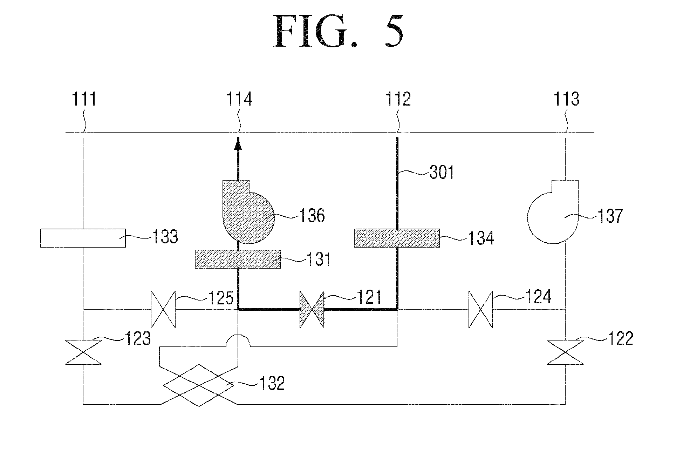

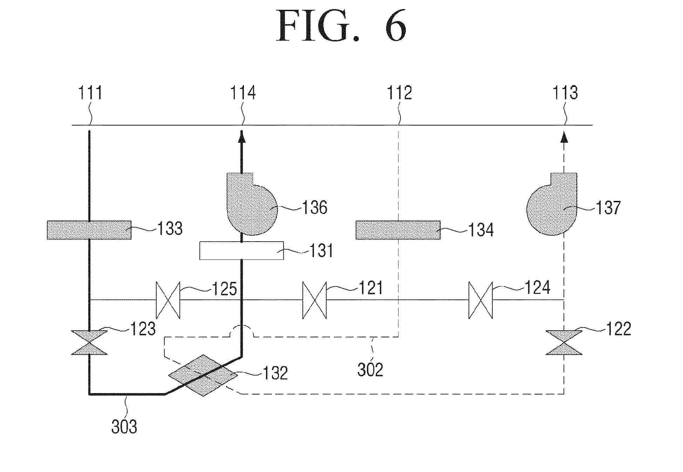

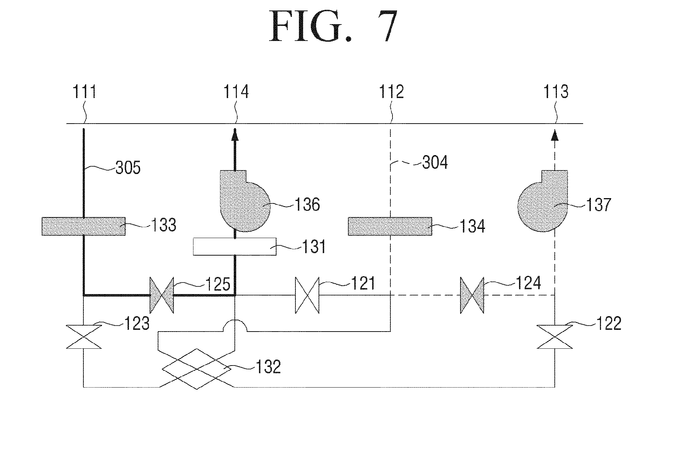

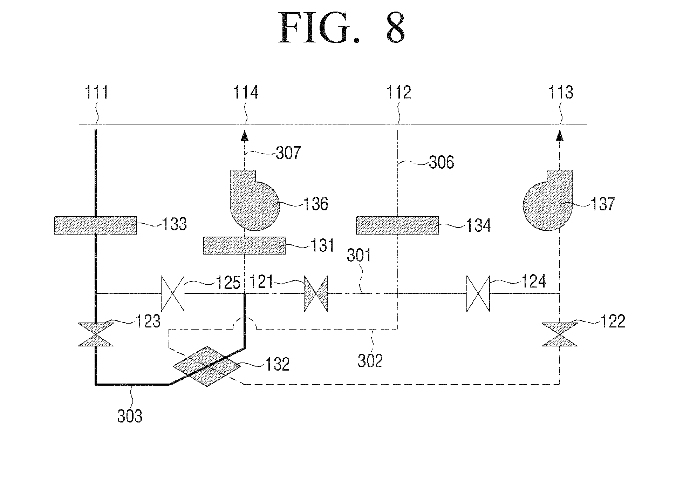

FIG. 5 is a schematic diagram illustrating flow paths in the case where the air conditioning device 1 according to an embodiment of the present disclosure performs cooling/heating through the indoor heat exchanger 131, and FIG. 6 is a schematic diagram illustrating flow paths in the case where the air conditioning device 1 performs heat recovery ventilation through the heat recovery ventilator 132. FIG. 7 is a schematic diagram illustrating flow paths in the case where the air conditioning device 1 performs pure ventilation, and FIG. 8 is a schematic diagram illustrating flow paths in the case where the air conditioning device 1 performs both the cooling/heating and heat recovery ventilation. Members that are darkly indicated are driving members, and members that are not darkly indicated are non-driving members.

Referring to FIGS. 3 to 5, in the case where the air conditioning device 1 according to an embodiment of the present disclosure performs the cooling/heating, the first flow path opening/closing portion 121 is opened, and air flows through the first flow path 301 that is indicated by a thick line. Specifically, in the case of performing the cooling/heating, outdoor air does not flow to the interior of a room, but the cooling/heating is performed through circulation of the indoor air only. That is, power consumption of the indoor heat exchanger 131 is increased, but indoor cooling/heating can be performed quickly.

First, the indoor air flows into the air conditioning device 1 through the second inlet port 112. The inflow air passes through the second filter 134 that filters pollution materials. Then, the indoor air flows only toward the first flow path opening/closing portion 121 that is in an open state among the first flow path opening/closing portion 121, the second flow path opening/closing portion 122, and the fourth flow path opening/closing portion 124.

The air that has passed through the first flow path opening/closing portion 121 passes through the second filter 134 for filtering the pollution materials once more, and then passes through the indoor heat exchanger 131 that performs heat exchange. As described above, in order for the air conditioning device 1 to perform cooling, the air discharges heat to the indoor heat exchanger 131, whereas in order to perform heating, the air absorbs heat from the indoor heat exchanger 131.

The heat-exchanged air is directed to the second discharge port 114 through the supply fan 136. The air that is discharged from the second discharge port 114 returns to the interior of a room through the fourth duct 204.

In this case, since the exhaust fan 137 is not positioned on the first flow path 301, it is not driven when the cooling/heating is performed. Accordingly, unnecessary power consumption can be reduced.

Next, referring to FIGS. 3, 4, and 6, in the case where the air conditioning device 1 according to an embodiment of the present disclosure performs the heat recovery ventilation, the second flow path opening/closing portion 122 and the third flow path opening/closing portion 123 are opened, and the air flows through the second flow path 302 that is indicated by a dotted line and the third flow path 303 that is indicated by a thick line. Specifically, in the case where the heat recovery ventilation is performed, the outdoor air flows to the interior of a room, and the indoor air is discharged to the outside.

First, the indoor air flows into the air conditioning device 1 through the second inlet port 112. The inflow air passes through the second filter 134 that filters pollution materials. Then, the indoor air flows only toward the second flow path opening/closing portion 122 that is in an open state among the first flow path opening/closing portion 121, the second flow path opening/closing portion 122, and the fourth flow path opening/closing portion 124.

Accordingly, the indoor air flows toward the heat recovery ventilator 132 after passing through the first ventilation port 141 that is directed to the second flow path opening/closing portion 122. Then, the indoor air flows through a first surface 132a of the heat recovery ventilator 132 and is discharged through a second surface 132b of the heat recovery ventilator 132. In this case, the indoor air exchanges heat with the outdoor air that flows through the third flow path 303.

Specifically, in the case of cooling the interior of a room, the temperature of the indoor air is lower than the temperature of the outdoor air, and thus heat is transferred from the outdoor air to the indoor air. In contrast, in the case of heating the interior of a room, the temperature of the indoor air is higher than the temperature of the outdoor air, and thus heat is transferred from the indoor air to the outdoor air.

Thereafter, the air that is discharged through the second surface 132b moves to an upper side on which the exhaust fan 137 is arranged through the second flow path opening/closing portion 122. In this case, the air moves through a space between the right external cover 115 and the internal cover 116.

Thereafter, the air that has reached the exhaust fan 137 is discharged through the first discharge portion 113 after passing through the exhaust fan 137, and then is discharged to the outside through the third duct 203.

Next, the outdoor air flows into the air conditioning device 1 through the first inlet port 111. The inflow outdoor air passes through the first filter 133 that filters the pollution materials. Thereafter, the outdoor air flows only toward the third flow path opening/closing portion 123 that is in an open state between the third flow path opening/closing portion 123 and the fifth flow path opening/closing portion 125. The air that has passed through the third flow path opening/closing portion 123 flows through a third surface 132c of the heat recovery ventilator 132 and is discharged through a fourth surface 132d. In this case, the indoor air exchanges heat with the indoor air that flows through the second flow path 302.

Thereafter, the air discharged through the fourth surface 132d moves toward the supply fan 136 through the second ventilation port 142. Then, the air that has passed through the supply fan 136 is discharged to the interior of a room through the second discharge port 114.

In this case, since the indoor heat exchanger 131 is not operated, but only the heat recovery ventilator 132 is operated, the indoor temperature is maintained almost as it is. That is, if the indoor temperature is lower than the outdoor temperature, the air that has flowed from the outside to the interior of a room flows to the interior of a room after transferring heat to the air that is discharged from the interior of a room to the outside, and thus it becomes cool air having a temperature that is similar to the indoor temperature. In contrast, if the indoor temperature is higher than the outdoor temperature, the air that flows from the outside to the interior of a room flows to the interior of a room after absorbing heat from the air that is discharged from the interior of a room to the outside, and thus it becomes warm air having a temperature that is similar to the indoor temperature. Accordingly, a user may use the heat recovery ventilation to perform ventilation with the indoor air maintained in spring or fall season.

Next, referring to FIGS. 3, 4, and 7, in the case where the air conditioning device 1 according to an embodiment of the present disclosure performs the pure ventilation, the fourth flow path opening/closing portion 124 and the fifth flow path opening/closing portion 125 are opened, and the air flows through the fourth flow path 304 that is indicated by a dotted line and the fifth flow path 305 that is indicated by a thick line. Specifically, in the case where the pure ventilation is performed, the outdoor air flows to the interior of a room, and the indoor air is discharged to the outside.

First, the indoor air flows into the air conditioning device 1 through the second inlet port 112. The inflow indoor air passes through the second filter 134 that filters pollution materials. Then, the indoor air flows only toward the fourth flow path opening/closing portion 124 that is in an open state among the first flow path opening/closing portion 121, the second flow path opening/closing portion 122, and the fourth flow path opening/closing portion 124.

The air that has passed through the fourth flow path opening/closing portion 124 flows toward the exhaust fan 137. The air that has passed through the exhaust fan 137 is discharged to the outside through the first discharge port 113.

Next, the outdoor air flows into the air conditioning device 1 through the first inlet port 111. The inflow outdoor air passes through the first filter 133 that filters the pollution materials. Thereafter, the outdoor air flows only toward the fifth flow path opening/closing portion 125 that is in an open state between the third flow path opening/closing portion 123 and the fifth flow path opening/closing portion 125.

The air that has passed through the fifth flow path opening/closing portion 125 moves toward the supply fan 136 after passing through the indoor heat exchanger 131. In this case, since the indoor heat exchanger 131 is not operated, heat exchange is not performed even if the outdoor air passes through the indoor heat exchanger 131.

Thereafter, the air that has passed through the supply fan 136 is discharged to the interior of a room through the second discharge port 114.

In the case of performing the pure ventilation, unlike the heat recovery ventilation, the air does not pass through the heat recovery ventilator 132, and thus heat exchange is not performed between the indoor air and the outdoor air. Accordingly, since the temperature of the indoor air can be set to be similar to the temperature of the outdoor air and the ventilation can be simultaneously performed, it becomes possible to maintain an agreeable indoor environment. That is, if the temperature of the indoor air is higher than the temperature of the outdoor air, the interior of a room can be made cool simultaneously with the ventilation, while if the temperature of the indoor air is lower than the temperature of the outdoor air, the interior of a room can be made warm simultaneously with the ventilation.

Further, since the inlet and outlet ports of the second flow path 302 and the third flow path 303 in the case of performing the heat recovery ventilation are equal to the inlet and outlet ports of the fourth flow path 304 and the fifth flow path 305 in the case of performing the pure ventilation, it is sufficient to arrange only one first filter 133 that filters the pollution materials from the outdoor air in a place that is adjacent to the first inlet port 111, and thus the number of filters required can be reduced to save the manufacturing cost of the product. Further, since the number of filters is reduced, air resistance due to the filters can be reduced, and thus the power consumption of the supply fan 136 and the exhaust fan 137 can be reduced.

Then, referring to FIGS. 3, 4, and 8, in the case where the air conditioning device 1 according to an embodiment of the present disclosure simultaneously performs the cooling/heating and the heat recovery ventilation, the first to third flow path opening/closing portions 121 to 123 are opened among the first to fifth flow path opening/closing portions 121 to 125, and thus the air flows through the first to third flow paths 301 to 303.

In the case of simultaneously performing the cooling/heating and the heat recovery ventilation, as described above, the heat recovery ventilator 132 primarily performs heat exchange, and then the indoor heat exchanger 131 secondarily performs heat exchange. Accordingly, the rate of heat exchange to be loaded by the indoor heat exchanger 131 is reduced, and thus cooling/heating efficiency is increased.

Specifically, in the case where the cooling/heating and the heat recovery ventilation are simultaneously performed, the first flow path opening/closing portion 121 and the second flow path opening/closing portion 122 are opened among the first flow path opening/closing portion 121, the second flow path opening/closing portion 122, and the fourth flow path opening/closing portion 124, and thus the indoor air flows through the first flow path 301 and the second flow path 302. Further, the third flow path opening/closing portion 123 is opened between the third flow path opening/closing portion 123 and the fifth flow path opening/closing portion 125, and thus the outdoor air flows through the third flow path 303.

In this case, the amount of the indoor air, which flows in through the second inlet port 112 and flows through the first flow path 301 and the second flow path 302, is adjusted by the degree of opening of the first flow path opening/closing portion 121 and the second flow path opening/closing portion 122. Further, the degree of opening of the third flow path opening/closing portion 123 is adjusted to match the amount of air that flows through the first flow path 30, and thus an inflow amount of the outdoor air can be adjusted.

That is, the indoor air that flows in through the second inlet port 112 flows through a flow path 306 that is indicated by a dash dot dot line, and then a part of the indoor air flows along the first flow path 301 that is indicated by a dash dot line and the remaining part thereof flows along the second flow path 302 that is indicated by a long dotted line. Here, in the same manner as the air that flows along the second flow path 302 in the case where the heat recovery ventilation is performed, the air that flows along the second flow path 302 exchanges heat with the outdoor air that flows from the heat recovery ventilator 132 to the third flow path 303, and then is discharged to the outside through the first discharge port 113.

Further, the outdoor air, of which the amount is smaller than the amount of air that flows through the third flow path 303 during the heat recovery ventilation by the third flow path opening/closing portion 123, flows in through the first inlet port 111. Then, in the same manner as a case where the heat recovery ventilation is performed, the outdoor air exchanges heat with the indoor air that flows from the heat recovery ventilator 132 to the second flow path 302, and then joins the air that flows along the first flow path 301. In this case, since the inflow outdoor air has already been heat-exchanged primarily, the rate of secondary heat exchange, which is to be performed by the outdoor heat exchanger that is arranged on a flow path 307 through which the joined air flows, is reduced. In this case, the primary and secondary heat exchanging processes are the same as heat transfer processes when the heat recovery ventilation and the cooling/heating are performed. After the secondary heat exchanging is completed, the air is discharged to the interior of a room through the second discharge port 114.

Embodiments of the invention may provide an air conditioning device having an indoor heat exchanger, a heat recovery ventilator, a supply fan, and an exhaust fan inside a housing and configured to perform at least one of cooling, heating, heat recovery ventilation, and pure ventilation, comprising: a first flow path configured to guide indoor air while at least one of cooling and heating is to be performed; a second flow path configured to guide the indoor air toward the heat recovery ventilator, and a third flow path configured to guide outdoor air toward the heat recovery ventilator while the heat recovery ventilation is to be performed; a fourth flow path configured to guide the indoor air, and a fifth flow path configured to guide the outdoor air while the pure ventilation is to be performed; and an inlet port and a discharge port formed on the housing, wherein the outdoor air flows through the inlet port to the third flow path and the fifth flow path, and the indoor air guided through the second flow path and the fourth flow path is discharged through the discharge port.

In some embodiments, there is a first inlet port through which outdoor air flows in; a second inlet port through which indoor air flows in; a first discharge port through which air is discharged to an outside; a second discharge port through which air is discharged to an inside; wherein in the first flow path the indoor air that flows in through the second inlet port is discharged to the second discharge port after the indoor air passes through the indoor heat exchanger; wherein in the second flow path the indoor air that flows in through the second inlet port is discharged to the first discharge port after the indoor air passes through the heat recovery ventilator; wherein in the third flow path the outdoor air that flows in through the first inlet port is discharged to the second discharge port after the outdoor air passes through the heat recovery ventilator; wherein in the fourth flow path the indoor air that flows in through the second inlet port is discharged to the first discharge port; and in the fifth flow path the outdoor air that flows in through the first inlet port is discharged to the second discharge port. In some such embodiments, the heat recovery ventilator is arranged in a portion of the second flow path and the third flow path in which the second flow path and the third flow path meet each other.

While the disclosure has been shown and described with reference to certain embodiments thereof, it will be understood by those skilled in the art that various changes in form and detail may be made therein without departing from the scope of the present disclosure, as defined by the appended claims.

## Claims

1. An air conditioning device having an indoor heat exchanger, a heat recovery ventilator, a supply fan, and an exhaust fan inside a housing and configured to perform at least one of cooling, heating, heat recovery ventilation, and pure ventilation, comprising:
a first flow path configured to guide indoor air while at least one of cooling and heating is to be performed;
a second flow path configured to guide the indoor air toward the heat recovery ventilator, and a third flow path configured to guide outdoor air toward the heat recovery ventilator while the heat recovery ventilation is to be performed;
a fourth flow path configured to guide the indoor air, and a fifth flow path configured to guide the outdoor air while the pure ventilation is to be performed; and
an inlet port and a discharge port formed on the housing,
wherein the outdoor air flows through the inlet port to the third flow path and the fifth flow path, and the indoor air guided through the second flow path and the fourth flow path is discharged through the discharge port.

2. The air conditioning device as claimed in claim 1, wherein the inlet port is a first inlet port and the discharge port is a first discharge port, and
the air conditioning device includes a second inlet port which corresponds to inlet of the first flow path, the second flow path, and the fourth flow path, and a second discharge port which corresponds to outlet of the first flow path, the third flow path, and the fifth flow path.

3. The air conditioning device as claimed in claim 1 or 2, wherein the heat recovery ventilator is arranged in a portion of the second flow path and the third flow path in which the second flow path and the third flow path meet each other.

4. The air conditioning device as claimed in any one of claims 1 to 3, comprising:
first to fifth flow path opening and closing portions correspondingly arranged on the first flow path, the second flow path, the third flow path, the fourth flow path and the fifth flow path and configured to selectively open and close the first flow path, the second flow path, the third flow path, the fourth flow path and the fifth flow path, respectively.

5. The air conditioning device as claimed in claim 4, wherein the first to fifth flow opening and closing portions are dampers.

6. The air conditioning device as claimed in claim 4 or 5, wherein while the at least one of the cooling and heating and the heat recovery ventilation are performed together, an amount of airflow that passes through the first flow path, the second flow path and the third flow path is adjusted by a degree of opening of first flow path, the second flow path and third flow path opening and closing portions among the first to fifth flow path opening and closing portions.

7. The air conditioning device as claimed in any one of claims 1 to 6, wherein a first filter is arranged in a part of a common section between the third flow path and fifth flow path to be adjacent to the inlet port.

8. The air conditioning device as claimed in any one of claims 1 to 7, wherein the exhaust fan is arranged in a part of a common section between the second flow path and fourth flow path to be adjacent to the discharge port, and
the exhaust fan is arranged to be driven while one of the second flow path and the fourth flow path is open.

9. The air conditioning device as claimed in claim 1, wherein the inlet port is a first inlet port,
the air conditioning device includes a second inlet port which corresponds to inlet of the first flow path, the second flow path, and the fourth flow path, and a second filter is arranged in a part of a common section between the first flow path, the second flow path, and the fourth flow path to be adjacent to the second inlet port.

10. The air conditioning device as claimed in claim 1, wherein the discharge port is a first discharge port, the air conditioning device includes a second discharge port which corresponds to outlet of the first flow path, the third flow path, and the fifth flow path, and
the supply fan and the indoor heat exchanger are arranged in a part of a common section between the first flow path, the third flow path, and the fifth flow path to be adjacent to the second discharge port.

11. The air conditioning device as claimed in claim 1, wherein the air conditioning device further comprises:
a first inlet port through which outdoor air flows in;
a second inlet port through which indoor air flows in;
a first discharge port through which air is discharged to an outside;
a second discharge port through which air is discharged to an inside;
wherein in the first flow path the indoor air that flows in through the second inlet port is discharged to the second discharge port after the indoor air passes through the indoor heat exchanger;
wherein in the second flow path the indoor air that flows in through the second inlet port is discharged to the first discharge port after the indoor air passes through the heat recovery ventilator;
wherein in the third flow path the outdoor air that flows in through the first inlet port is discharged to the second discharge port after the outdoor air passes through the heat recovery ventilator;
wherein in the fourth flow path the indoor air that flows in through the second inlet port is discharged to the first discharge port; and
wherein in the fifth flow path the outdoor air that flows in through the first inlet port is discharged to the second discharge port.

12. An air conditioning device having an indoor heat exchanger, a heat recovery ventilator, a supply fan, and an exhaust fan and is configured to perform at least one of cooling and heating, heat recovery ventilation, and pure ventilation, the air conditioning device comprising:
a first inlet port through which outdoor air flows in;
a second inlet port through which indoor air flows in;
a first discharge port through which air is discharged to an outside;
a second discharge port through which air is discharged to an inside;
a first flow path through which the indoor air that flows in through the second inlet port is discharged to the second discharge port after the indoor air passes through the indoor heat exchanger;
a second flow path through which the indoor air that flows in through the second inlet port is discharged to the first discharge port after the indoor air passes through the heat recovery ventilator;
a third flow path through which the outdoor air that flows in through the first inlet port is discharged to the second discharge port after the outdoor air passes through the heat recovery ventilator;
a fourth flow path through which the indoor air that flows in through the second inlet port is discharged to the first discharge port; and
a fifth flow path through which the outdoor air that flows in through the first inlet port is discharged to the second discharge port,
wherein the heat recovery ventilator is arranged in a portion of the second flow path and the third flow path in which the second flow path and the third flow path meet each other.

13. The air conditioning device as claimed in claim 12, comprising:
first to fifth flow path opening and closing portions arranged on the first to fifth flow paths and configured to selectively open and close the first to fifth flow paths, respectively.

14. The air conditioning device as claimed in claim 12 or 13, wherein a first filter is arranged in a part of a common section between the third flow path and the fifth flow path to be adjacent to the first inlet port; and/or
wherein the exhaust fan is arranged in a part of a common section between the second flow path and fourth flow path to be adjacent to the first discharge port, and
the exhaust fan is driven while the second flow path or the fourth flow path is opened.

15. An air conditioning device having an indoor heat exchanger, a heat recovery ventilator, a supply fan, and an exhaust fan inside a housing and configured to perform at least one of cooling and heating, heat recovery ventilation, and pure ventilation, comprising:
a first inlet port, a second inlet port, a first discharge port, and a second discharge port, which are formed on an outer surface of the housing;
first to fifth flow path opening and closing portions arranged inside the housing;
a first flow path configured to guide indoor air, which flows in through the second inlet port and moves to the indoor heat exchanger through a first of the first to fifth flow path opening and closing portions, to be discharged to the second discharge port after the heat exchange of the indoor air is performed through the indoor heat exchanger;
a second flow path configured to guide the indoor air, which flows in through the second inlet port and passes through the heat recovery ventilator, to be discharged to the first discharge port through a second of the first to fifth flow path opening and closing portions after the heat exchange of the indoor air is performed through the heat recovery ventilator;
a third flow path configured to guide outdoor air, which flows in through the first inlet port and moves to the heat recovery ventilator through a third of the first to fifth flow path opening and closing portions, to be discharged to the second discharge port after the heat exchange of the outdoor air is performed through the heat recovery ventilator;
a fourth flow path configured to guide the indoor air, which flows in through the second inlet port, to be discharged to the first discharge port through a fourth of the first to fifth flow path opening and closing portions; and
a fifth flow path configured to guide the outdoor air, which flows in through the first inlet port, to be discharged to the second discharge port through a fifth of the first to fifth flow path opening and closing portions,
wherein the heat recovery ventilator is arranged in a portion in which the second flow path and the third flow path meet each other, and a first filter is arranged in a part of a common section between the third flow path and fifth flow path to be adjacent to the first inlet port.
